(19) Europäisches Patentamt
European Patent Office
Office européen des brevets

(11) **EP 3 639 362 B1**

(12) **EUROPÄISCHE PATENTSCHRIFT**

(45) Veröffentlichungstag und Bekanntmachung des Hinweises auf die Patenterteilung:
**15.12.2021 Patentblatt 2021/50**

(21) Anmeldenummer: **18718456.9**

(22) Anmeldetag: **18.04.2018**

(51) Int Cl.:
*H02P 6/18* (2016.01)          *H02P 6/28* (2016.01)

(86) Internationale Anmeldenummer:
**PCT/EP2018/059865**

(87) Internationale Veröffentlichungsnummer:
**WO 2018/228741 (20.12.2018 Gazette 2018/51)**

(54) **VERFAHREN ZUR ERMITTLUNG VON PHASENSTRÖMEN EINER MITTELS EINES PWM-GESTEUERTEN WECHSELRICHTERS GESPEISTEN, ROTIERENDEN, MEHRPHASIGEN, ELEKTRISCHEN MASCHINE**

METHOD FOR DETERMINING PHASE CURRENTS OF A PWM CONTROLLED INVERTER DRIVEN ROTATING POLYPHASE ELECTRIC MACHINE

PROCÉDÉ DE DÉTERMINATION DE COURANTS DE PHASE D'UNE MACHINE ÉLECTRIQUE ROTATIVE À POLYPHASES ENTRAÎNÉE PAR UN PWM-ONDULEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2017 DE 102017210071**

(43) Veröffentlichungstag der Anmeldung:
**22.04.2020 Patentblatt 2020/17**

(73) Patentinhaber: **Robert Bosch GmbH**
**70442 Stuttgart (DE)**

(72) Erfinder:
• **ROETZER, Marco**
**78736 Epfendorf (DE)**
• **VOLLMER, Ulrich**
**73235 Weilheim (DE)**
• **BENDEL, Michael**
**70195 Stuttgart-Botnang (DE)**

(56) Entgegenhaltungen:
**US-A1- 2007 132 415**

• **LANDSMANN P ET AL: "Silent injection for saliency based sensorless control by means of current oversampling", INDUSTRIAL TECHNOLOGY (ICIT), 2013 IEEE INTERNATIONAL CONFERENCE ON, IEEE, 25. Februar 2013 (2013-02-25), Seiten 398-403, XP032377133, DOI: 10.1109/ICIT.2013.6505705 ISBN: 978-1-4673-4567-5**

**Beschreibung**

Stand der Technik

Die Erfindung betrifft ein Verfahren zur Ermittlung von Phasenströmen einer mittels eines PWM-gesteuerten Wechselrichters gespeisten, rotierenden, mehrphasigen, elektrischen Maschine.

Solch ein Verfahren ist beispielsweise in dem wissenschaftlichen Artikel von P. Landsmann et al. ["Silent injection for slaiency based sensorless controll by means of current oversampling", Industrial Technology (ICIT), 2013 IEEE International Conference, S. 398-403] offenbart. Darin ist eine geberlose Regelung aufgezeigt, welche versucht die Rotorposition der elektrischen Maschine ohne Verwendung eines Positionssensors zu bestimmen, indem die Phasenströme der elektrischen Maschine ermittelt werden. Dabei kommt bei geringen Drehzahlen ein sogenanntes anisotropiebasiertes Verfahren zum Einsatz, welches über die magnetische Anisotropie der Maschine die Rotorlage bestimmt.

Bei hochdynamischen Antrieben wird zur Erzeugung der einstellbaren Phasenspannung der elektrischen Maschinen in der Regel ein Wechselrichter mit Pulsweitenmodulation (PWM) verwendet. Die Steuersignale des Wechselrichters werden mit Hilfe einer Raumzeigermodulation berechnet, welche die von einer Regelung ermittelten, anzulegenden Spannungszeiger in PWM-Tastverhältnisse umrechnet. Bei gängigen anisotropiebasierten Verfahren, wie beispielsweise in dem wissenschaftlichen Artikel von S. Kim [PWM Switching Frequency Singal Injection Sensorless Method in IPMSM, 2012, IEEE Transactions on Industry Applications] offenbart, wird durch gezielte Veränderung der Spannungszeiger eine lageabhängige Stromänderung produziert, welche durch Strommessungen zu geeigneten Zeitpunkten erfasst wird. Hierbei werden die zum Einregeln der Stellgrößen benötigten Spannungen beispielhaft mit einer hochfrequenten Spannung überlagert. Die durch die hochfrequente Spannung erzeugten hochfrequenten Stromänderungen enthalten entsprechende Rotorlageinformationen.

Je nach verwendeten Stromsensoren und verwendeter PWM-Ansteuerung können die Phasenströme pro PWM-Periode in einem oder in beiden passiven Schaltzuständen des Wechselrichters PWM-synchron erfasst werden. Können die Phasenströme in nur einem der beiden passiven Schaltzustände gemessen werden, was z. B. bei einer Shunt-Messung im Lowside-Pfad des Wechselrichters der Fall ist, so ist es sinnvoll, diesen einen passiven Schaltzustand zeitlich maximal auszureizen, um möglichst viele Strommessungen durchführen zu können. Können die Phasenströme dagegen in beiden passiven Schaltzustände gemessen werden, so sollten auch beide passiven Schaltzustände gleich lange gestellt werden.

Durch eine Überabtastung der einzelnen Phasenströme kann der Einfluss von Störungen reduziert und entsprechend das Signal-Rausch-Verhältnis der Phasenströme verbessert werden, wie dies beispielsweise in dem wissenschaftlichen Artikel von P. Landsmann gezeigt ist. Als Überabtastung ist hierbei zu verstehen, dass die Phasenströme innerhalb eines passiven Schaltzustand des Wechselrichters mehrmals hintereinander gemessen werden und anschließend die gemessenen Stromwerte gemittelt werden, um einen endgültigen Wert für den jeweiligen Phasenstrom zu erhalten.

Die ermittelten Phasenströme können anschließend in ein zweidimensionales Ersatzsystem, welches z.B. als ständerfestes, rotorflussorientiertes oder auch injektionsspannungsorientiertes Koordinatensystem ausgestaltet sein kann, transformiert werden. Um den hochfrequenten Stromanteil vom Grundwellenstrom zu trennen, kann daraufhin ein Demodulationsverfahren durchgeführt werden. In Abhängigkeit von dem hochfrequenten Stromanteil kann daraufhin beispielsweise die Rotorlage bestimmt werden.

Offenbarung der Erfindung

Die Erfindung betrifft ein Verfahren zur Ermittlung von Phasenströmen einer mittels eines PWM-gesteuerten Wechselrichters gespeisten, rotierenden, mehrphasigen, elektrischen Maschine. Die elektrische Maschine kann beispielsweise eine permanenterregte Synchronmaschine sein. Das Verfahren umfasst die Verfahrensschritte:

a. Bestimmen von Injektionsspannungen zu einem Zeitpunkt während einer Reglerabtastperiode, welche in wenigstens einer PWM-Periode nach diesem Zeitpunkt zur Ansteuerung der elektrischen Maschine angelegt werden, die Injektionsspannungen setzen sich dabei aus vorgegebenen Spannungen, welche einen entsprechenden Grundwellenstrom erzeugen, und zusätzlich hochfrequenten Spannungen zusammen,

b. Bestimmen einer Auswerte-Richtung eines Phasenstromvektors der elektrischen Maschine in Abhängigkeit von den im Schritt a bestimmten Injektionsspannungen und/oder von einem Betriebspunkt der elektrischen Maschine und/oder von einer Temperaturabhängigkeit des Phasenstromvektors,

c. Bestimmen je einer Anzahl an Strommessungen für jeden der Phasenströme der elektrischen Maschine, welche in wenigstens einem passiven Schaltzustand des Wechselrichters innerhalb der wenigstens einen PWM-Periode durchgeführt werden sollen, in Abhängigkeit von der im Verfahrensschritt b bestimmten Auswerte-Richtung,

d. Ermitteln der Phasenströme, welche in der wenigstens einen PWM-Periode in der elektrischen Maschine fließen, in Abhängigkeit von der jeweiligen im Verfahrensschritt c bestimmten Anzahl an Strommessungen.

Vorteilhaft ist hierbei, dass die Phasenströme üblicherweise einen unterschiedlichen Informationsgehalt aufweisen. Dieser Informationsgehalt ist in einem zweidimensionalen Koordinatensystem als richtungsabhängig anzusehen. Der Informationsgehalt steckt hierbei in der durch die Injektionsspannungen verursachten hochfrequenten Stromänderung, in deren Abhängigkeit beispielsweise auf die Rotorlage der elektrischen Maschine geschlossen werden kann. Hierbei korreliert der Phasenstromvektor beispielsweise mit einem Rotorlagefehler.

Indem die Anzahl der Strommessungen für die einzelnen Phasenströme nun derartig bestimmt werden, dass die Auswerte-Richtung bei der Bestimmung der Aufteilung der Strommessungen mit einfließt, kann der Phasenstrom mit dem größten Informationsgehalt am häufigsten gemessen werden. Hierdurch kann für diesen Phasenstrom wiederum das Signal-Rausch-Verhältnis verbessert und somit die in diesem Phasenstrom steckenden Informationen mit einem geringeren Fehler ermittelt werden.

Die Auswerte-Richtung wird hierbei derartig bestimmt, dass sie mit der Richtung des Phasenstroms übereinstimmt, welcher den größten Informationsgehalt aufweist. Dies ist beispielsweise der Phasenstrom, in dessen Richtung die hochfrequente Stromänderung am signifikantesten ist.

Auch bei Verfahren, welche die Magnettemperatur durch Ermittlung des Sättigungszustands der elektrischen Maschine bestimmen, kann das Signal-Rausch-Verhältnis verbessert werden, indem eine Auswerte-Richtung gewählt wird, in welcher der Phasenstromvektor eine möglichst große Temperaturabhängigkeit aufweist.

Unter Reglerabtastperiode ist hierbei die Zeitdauer zwischen zwei Reglerabtastschritten zu verstehen, welche dazu dienen, die an die elektrische Maschine anzulegenden Injektionsspannungen zu bestimmen. Die Injektionsspannungen werden mittels eines Reglers bestimmt. Die Injektionsspannungen setzen sich dabei aus durch den Regler zur Ansteuerung der elektrischen Maschine vorgegebenen Spannungen, welche einen entsprechenden Grundwellenstrom erzeugen, und zusätzlichen hochfrequenten Spannungen zusammen. Der Grundwellenstrom sorgt hierbei für den gewünschten Betrieb der Maschine beispielsweise mit einer vorbestimmten Drehzahl oder auch einem vorgegebenen Drehmoment. Durch die hochfrequenten Spannungen kann des Weiteren beispielsweise eine lageabhängige Stromänderung erzielt werden, wobei aus dieser Stromänderung beispielsweise Rückschlüsse auf die Rotorlage der elektrischen Maschine getroffen werden können.

Da die Stromregelung, welche zum Einregeln des Grundwellenstroms verwendet wird, unempfindlicher gegenüber Rauschen als die Rotorlage- bzw. Temperaturabschätzung ist, führt die Anpassung der Anzahl an Strommessungen je Phasenstrom nur zu einer vernachlässigbar kleinen Verschlechterung dieser Stromregelung. Das verbesserte Signal-Rausch-Verhältnis führt bei solchen anisotropiebasierten Verfahren außerdem zu einer geringeren Geräuschentwicklung.

Das Bestimmen der Anzahl an Strommessungen für jeden der Phasenströme wird in Abhängigkeit von der zuvor bestimmten Auswerte-Richtung und beispielsweise unter Verwendung einer allgemeinen Clarke-Transformation durchgeführt. Dies führt dazu, dass für den Phasenstrom mit dem größten Informationsgehalt die größte Anzahl an Strommessungen bestimmt wird.

Unter Strommessung ist hierbei zu verstehen, dass je ein Phasenstrom mittels wenigstens eines Stromsensors erfasst und dieser Stromsensor dann von wenigstens einem Analog-Digital-Wandler (AD-Wandler) abgetastet wird, um einen Stromwert für den jeweiligen Phasenstrom zu erhalten. Üblicherweise kann dabei angenommen werden, dass jeder AD-Wandler jeden Stromsensor abtasten kann.

Unter passivem Schaltzustand des Wechselrichters ist ein Zustand zu verstehen, in dem alle High-Side-Transistoren des Wechselrichters oder alle Low-Side-Transistoren des Wechselrichters leitend sind.

In einer Ausgestaltung des erfindungsgemäßen Verfahrens ist vorgesehen, dass die Anzahl an Strommessungen, welche im Verfahrensschritt c für jeden Phasenstrom bestimmt wird, in Summe für alle Phasenströme einer maximal möglichen Anzahl an Strommessungen innerhalb des wenigstens einen passiven Schaltzustands des Wechselrichters entspricht.

Vorteilhaft ist hierbei, dass der Zeitraum für mögliche Strommessungen maximal ausgereizt wird, um somit das Signal-Rausch-Verhältnis der entsprechenden Phasenströme weiter zu optimieren.

Die maximal mögliche Anzahl an Strommessungen innerhalb des wenigstens einen passiven Schaltzustands hängt dabei unter anderem von der Dauer des passiven Schaltzustands selbst ab, aber auch von der Dauer der Abtastgeschwindigkeit der AD-Wandler und deren Totzeiten.

Gemäß einer Ausgestaltung des erfindungsgemäßen Verfahrens ist vorgesehen, dass im Verfahrensschritt d wenigstens einer der Phasenströme mittels mehrerer AD-Wandler ermittelt wird.

Vorteilhaft ist hierbei, dass insgesamt mehr Strommessungen als mit nur einem AD-Wandler durchgeführt werden können, wodurch das Signal-Rausch-Verhältnis des jeweiligen Phasenstroms weiter verbessert werden kann.

Gemäß einer Ausgestaltung des erfindungsgemäßen Verfahrens ist vorgesehen, dass die Ermittlung des wenigstens einen Phasenstroms erfolgt, indem die mehreren AD-Wandler den wenigstens einen Phasenstrom zeitlich versetzt zueinander abtasten.

Vorteilhaft ist hierbei, dass möglicherweise vorhandene Störungen bei der Strommessung nicht doppelt erfasst werden.

Unter zeitlich versetzt ist dabei zu verstehen, dass die Zeitpunkte für die Erfassung des jeweiligen Phasenstroms mittels den mehreren AD-Wandlern nicht identisch sind. Ein Versatz der Abtastzeitpunkte um einen Bruchteil einer Wandlungszeit der jeweiligen AD-Wandler ist hierbei bereits ausreichend.

Gemäß einer Ausgestaltung des erfindungsgemäßen Verfahrens ist vorgesehen, dass im Verfahrensschritt d die Strommessungen in der Mitte des wenigstens einen passiven Schaltzustands erfolgen.

Hierbei ist unter der Mitte des wenigstens einen passiven Schaltzustands zu verstehen, dass die Messzeitpunkte der Strommessungen um die zeitliche Mitte des passiven Schaltzustands herum durchgeführt werden.

Vorteilhaft ist hierbei, dass wenn der mittlere Messzeitpunkt in der Mitte des passiven Schaltzustands und somit am PWM-Anfang bzw. bei mittenzentrierter PWM-Ansteuerung in der PWM-Mitte liegt, der Einfluss der PWM-Ansteuerung auf die gemessenen Phasenströme vernachlässigt werden kann.

In einer Ausgestaltung des erfindungsgemäßen Verfahrens ist vorgesehen, dass im Verfahrensschritt d die Strommessungen der jeweiligen Phasenströme spiegelsymmetrisch zueinander erfolgen.

Vorteilhaft ist hierbei, dass man davon ausgeht, dass die Phasenströme in einem passiven Schaltzustand nahezu linear abfallen. Hierbei können durch eine spiegelsymmetrische Abtastung der jeweiligen Phasenströme und anschließender Mittelung der abgetasteten Stromwerte die Phasenströme für alle Phasen ermittelt werden, welche zum mittleren Messzeitpunkt flossen.

Unter spiegelsymmetrisch ist zu verstehen, dass wenn beispielsweise ein erster und ein zweiter Phasenstrom gemessen werden sollen, zuerst der erste Phasenstrom einmal gemessen wird, anschließend der zweite Phasenstrom einmal gemessen wird und daraufhin nochmals der erste Phasenstrom einmal gemessen wird.

Gemäß einer Ausgestaltung des erfindungsgemäßen Verfahrens ist vorgesehen, dass im Verfahrensschritt c für den Phasenstrom, welcher richtungsbezogen am weitesten von der Auswerte-Richtung abweicht, als Anzahl der Strommessungen Null bestimmt wird, wobei dieser Phasenstrom im Verfahrensschritt d in Abhängigkeit von den übrigen Phasenströmen mittels des ersten Kirchhoffschen Gesetzes ermittelt wird.

Vorteilhaft ist hierbei, dass der Phasenstrom, welcher richtungsbezogen am weitesten von der Auswerte-Richtung abweicht, auch den geringsten Informationsgehalt aufweist. Dieser Phasenstrom wird dann überhaupt nicht gemessen, sondern aus den übrigen Phasenströmen berechnet. Somit können mehr Strommessungen für die übrigen, informationsreicheren Phasenströme durchgeführt werden, wodurch das Signal-Rausch-Verhältnis für diese Phasenströme weiter verbessert werden kann. Der Phasenstrom, welcher richtungsbezogen am weitesten von der Auswerte-Richtung abweicht, ist dadurch definiert, dass bei diesem Phasenstrom der Betrag des Skalarprodukts von einem Einheitsvektor, welcher in Auswerte-Richtung zeigt, und einem Einheitsvektor, welcher in die Phasenstrom-Richtung zeigt, am kleinsten ist. Dies verdeutlicht, dass die Richtung des Phasenstroms als "Achse" angesehen werden kann und somit auch immer die entgegengesetzte Richtung des Phasenstroms, also richtungsbezogen quasi die negativen Werte des Phasenstroms, betrachtet werden muss.

Gemäß einer Ausgestaltung des erfindungsgemäßen Verfahrens ist vorgesehen, dass nach dem Verfahrensschritt d ein Verfahrensschritt e und ein Verfahrensschritt f ablaufen, wobei im Verfahrensschritt e eine Clarke-Transformation in Abhängigkeit der im Verfahrensschritt c bestimmten Anzahl der Strommessungen für jeden Phasenstrom und/oder in Abhängigkeit von der im Verfahrensschritt b bestimmten Auswerte-Richtung bestimmt wird, und wobei im Verfahrensschritt f der Phasenstromvektor in Auswerte-Richtung in Abhängigkeit von der Clarke-Transformation und den im Verfahrensschritt d ermittelten Phasenströmen, deren Anzahl an Strommessungen größer Null ist, bestimmt wird.

Vorteilhaft ist hierbei, dass die Stromkomponente in Auswerte-Richtung besonders effizient berechnet wird, da die Phasenströme, deren Anzahl an Strommessungen gleich Null ist, nicht in der Berechnung verwendet werden.

Die Erfindung betrifft zudem eine elektrische Maschine, wobei die elektrische Maschine rotierend und mehrphasig ausgestaltet und mittels eines PWM-gesteuerten Wechselrichters gespeist ist. Die elektrische Maschine ist dazu eingerichtet, ein erfindungsgemäßes Verfahren durchzuführen.

Zeichnungen

Fig. 1 zeigt ein Ausführungsbeispiel eines erfindungsgemäßen Verfahrens zur Ermittlung von Phasenströmen einer mittels eines PWM-gesteuerten Wechselrichters gespeisten, rotierenden, mehrphasigen, elektrischen Maschine.

Fig. 2 zeigt ein beispielhaftes Phasenstrom-Zeit-Diagramm für das in Fig. 1 dargestellte Verfahren und die mittels AD-Wandler durchgeführten Zeitpunkte der Strommessungen der jeweiligen Phasenströme.

Fig. 3 zeigt ein Ausführungsbeispiel einer mehrphasigen, elektrischen Maschine, welche dazu eingerichtet ist, ein erfindungsgemäßes Verfahren durchzuführen.

Beschreibung von Ausführungsbeispielen

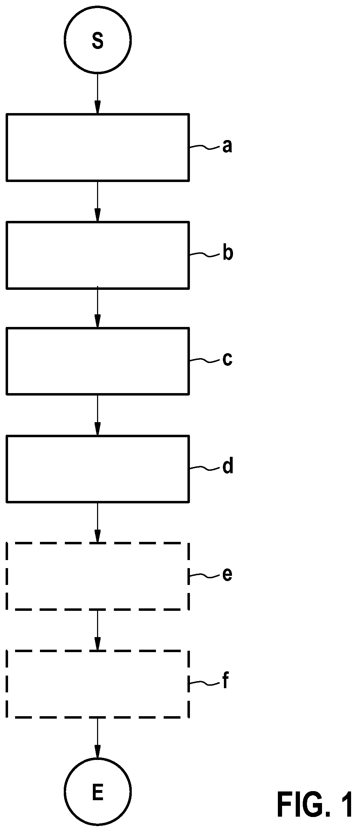

Fig. 1 zeigt ein erstes Ausführungsbeispiel eines erfindungsgemäßen Verfahrens.
Mittels des Verfahrens werden die Phasenströme $i_a$, $i_b$, $i_c$ einer mittels eines PWM-gesteuerten Wechselrichters gespeisten, dreiphasigen, rotierenden, elektrischen Maschine bestimmt. Anhand der bestimmten Phasenströme $i_a$, $i_b$, $i_c$ lässt sich beispielsweise die Rotorlage der elektrischen Maschine abschätzen.

Zu Beginn werden in einem Verfahrensschritt a zu einem Zeitpunkt während einer Reglerabtastperiode Injektionsspannungen bestimmt, welche in wenigstens einer PWM-Periode nach diesem Zeitpunkt zur Ansteuerung der elektrischen Maschine angelegt werden. Die Injektionsspannungen werden mittels eines Reglers bestimmt. Die Injektionsspannungen setzen sich dabei aus durch den Regler zur Ansteuerung der elektrischen Maschine vorgegebenen Spannungen, welche einen entsprechenden Grundwellenstrom erzeugen, und zusätzlichen hochfrequenten Spannungen zusammen. Der Grundwellenstrom sorgt hierbei für den gewünschten Betrieb der Maschine beispielsweise mit einer vorbestimmten Drehzahl oder auch einem vorgegebenen Drehmoment. Durch die hochfrequenten Spannungen kann des Weiteren beispielsweise eine lageabhängige Stromänderung erzielt werden, wobei aus dieser Stromänderung beispielsweise Rückschlüsse auf die Rotorlage der elektrischen Maschine getroffen werden können.

In einem Verfahrensschritt b kann anschließend eine Auswerte-Richtung in Abhängigkeit von den im Verfahrensschritt a bestimmten Injektionsspannungen bestimmt werden. Die Auswerte-Richtung orientiert sich hierbei beispielsweise an der Richtung der hochfrequenten Spannungsinjektion, welche zusätzlich zu den zum Einregeln der Stellgrößen benötigten Spannungen eingespeist werden. Dies liegt darin begründet, dass die durch die hochfrequente Spannung erzeugten hochfrequenten Stromänderungen entsprechende Rotorlageinformationen enthalten, wobei die Richtung der Stromänderung mit der Richtung der hochfrequenten Spannungsinjektion korreliert. Wird nun beispielsweise angenommen, dass die gesamte Rotorlageinformation im Phasenstrom $i_a$ enthalten ist, wird die Richtung des Phasenstroms $i_a$ als Auswerte-Richtung für den Phasenstromvektor bestimmt.

Nach dem Verfahrensschritt b wird in einem Verfahrensschritt c bestimmt, wie viele Strommessungen für jeden der drei Phasenströme $i_a$, $i_b$, $i_c$ in wenigstens einem passiven Schaltzustand des Wechselrichters innerhalb der wenigstens einen PWM-Periode durchgeführt werden sollen. Dies wird hierbei in Abhängigkeit von der im Verfahrensschritt b bestimmten Auswerte-Richtung bestimmt. Da im Verfahrensschritt b die Auswerte-Richtung beispielhaft in Richtung des Phasenstroms $i_a$ bestimmt wurde, wird die Anzahl der Strommessungen für den Phasenstrom $i_a$ maximiert, um das Signal-Rausch-Verhältnis für den Phasenstrom $i_a$ zu optimieren. Der Phasenstrom $i_b$ kann des Weiteren als Anzahl der Strommessungen lediglich eine Eins zugeteilt bekommen und der Phasenstrom $i_c$ als Anzahl der Strommessungen gar eine Null. Die maximale Anzahl an Strommessungen ist beispielsweise von der Abtastzeit der AD-Wandler und deren Totzeit abhängig. So kann insgesamt pro passiven Schaltzustand nur eine begrenzte Anzahl an Strommessungen durchgeführt werden, welche dann entsprechend auf die einzelnen Phasenströme $i_a$, $i_b$, $i_c$ aufgeteilt werden können.

Anschließend werden in einem Verfahrensschritt d die Phasenströme $i_a$, $i_b$, $i_c$ ermittelt, wobei diese Ermittlung in Abhängigkeit von der jeweiligen im Verfahrensschritt c bestimmten Anzahl an Strommessungen erfolgt. Die einmalige Strommessungen des Phasenstroms $i_b$ ist dabei notwendig, um den Phasenstromvektor eindeutig bestimmen zu können. Für den Phasenstrom $i_c$ ist, wie zuvor bereits erwähnt, in diesem Fall überhaupt keine Strommessung notwendig, da dieser beispielsweise folgendermaßen mittels des ersten Kirchhoffschen Gesetzes aus dem Phasenstrom $i_a$ und dem Phasenstrom $i_b$ bestimmt werden kann:

$$i_c = -i_a - i_b$$

Optional können nach dem Verfahrensschritt d noch ein Verfahrensschritt e und ein Verfahrensschritt f ablaufen. Hierbei wird im Verfahrensschritt e eine Clarke-Transformation in Abhängigkeit der im Verfahrensschritt c bestimmten Anzahl der Strommessungen für jeden der Phasenströme oder auch in Abhängigkeit von der im Verfahrensschritt b bestimmten Auswerte-Richtung bestimmt.

Im Verfahrensschritt f wird anschließend der Phasenstromvektor in Auswerte-Richtung in Abhängigkeit von der im Verfahrensschritt f bestimmten Clarke-Transformation und den im Verfahrensschritt d ermittelten Phasenströmen, deren Anzahl an Strommessungen größer Null ist, bestimmt.

In diesem Beispiel weist die zur Auswertung genutzte Clarke-Transformation daher nur eine Abhängigkeit von den Phasenströmen $i_a$ und $i_b$ auf.

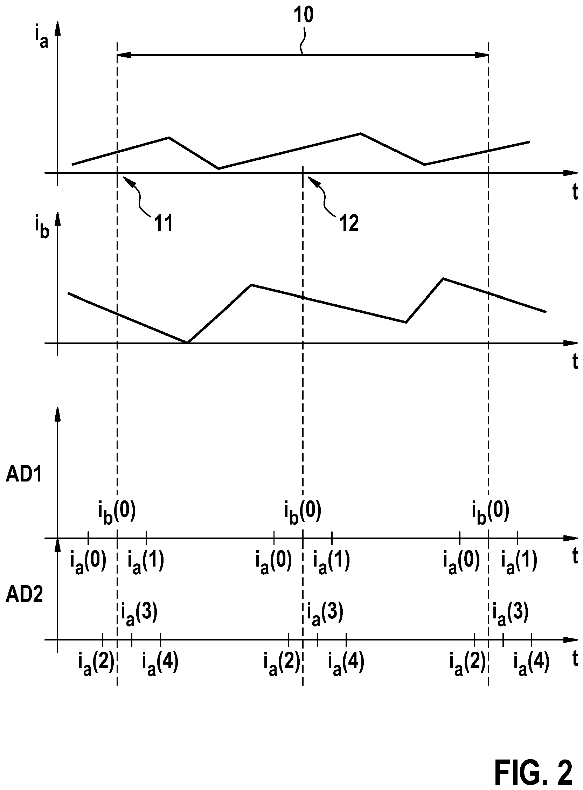

Fig. 2 zeigt ein beispielhaftes Phasenstrom-Zeit-Diagramm für das in Fig. 1 dargestellte Verfahren und die mittels der AD-Wandler durchgeführten Zeitpunkte der Strommessungen der jeweiligen Phasenströme.

Dargestellt sind die Verläufe der Phasenströme $i_a$ und $i_b$ über die Zeit t. Zudem ist die Dauer einer PWM-Periode 10 dargestellt, wobei die PWM-Periode 10 einen PWM-Anfang 11 und eine PWM-Mitte 12 aufweist.

Des Weiteren ist das Abtastverhalten eines ersten AD-Wandlers AD1 und eines zweiten AD-Wandlers AD2 dargestellt, wobei der erste und zweite AD-Wandler AD1 und AD2 bei Bedarf jeweils alle Phasenströme $i_a$, $i_b$ und $i_c$ über Stromsensoren abtasten könnten. Die Strommessungen werden hierbei sowohl um den PWM-Anfang 11 als auch um die PWM-Mitte 12 herum durchgeführt.

Wie in Fig. 1 beschrieben, soll der Phasenstrom $i_a$ maximal oft gemessen werden, da dieser den größten Informationsgehalt aufweist. Aus diesem Grund wird mittels des ersten AD-Wandlers AD1 um den PWM-Anfang 11 herum der Phasenstrom $i_a$ zweifach und der Phasenstrom $i_b$ nur einmal abgetastet, was zu den Stromwerten $i_a(0)$, $i_b(0)$ und $i_a(1)$ führt. Mittels des zweiten AD-Wandlers AD2 wird dagegen nur der Phasenstrom $i_a$ um den PWM-Anfang 11 herum gemessen, was entsprechend zu den Stromwerten $i_a(2)$, $i_a(3)$ und $i_a(4)$ führt.

Es ist zu beachten, dass die Phasenströme $i_a$ und $i_b$ vom ersten AD-Wandler AD1 spiegelsymmetrisch zueinander abgetastet werden. So umrahmen die beiden Messungen des Phasenstroms $i_a$ die Messung des Phasenstroms $i_b$. Zudem tasten die AD-Wandler AD1 und AD2 leicht versetzt zueinander ab.

Die Aufteilung und Durchführung der Strommessungen durch die AD-Wandler AD1 und AD2 wird um die PWM-Mitte 12 und um den PWM-Anfang der nachfolgenden PWM-Periode herum entsprechend wiederholt.

Um die Phasenströme $i_a$, $i_b$ und $i_c$ dann endgültig zu ermitteln, werden die für den Phasenstrom $i_a$ erfassten Stromwerte $i_a(0)$, $i_a(1)$, $i_a(2)$, $i_a(3)$ und $i_a(4)$ gemittelt. Zudem wird für den Phasenstrom $i_b$ der erfasste Stromwert $i_b(0)$ herangezogen und der Phasenstrom $i_c$ mittels der ersten Kirchhoffschen Regel aus dem gemittelten Phasenstrom $i_a$ und dem Phasenstrom $i_b$ berechnet.

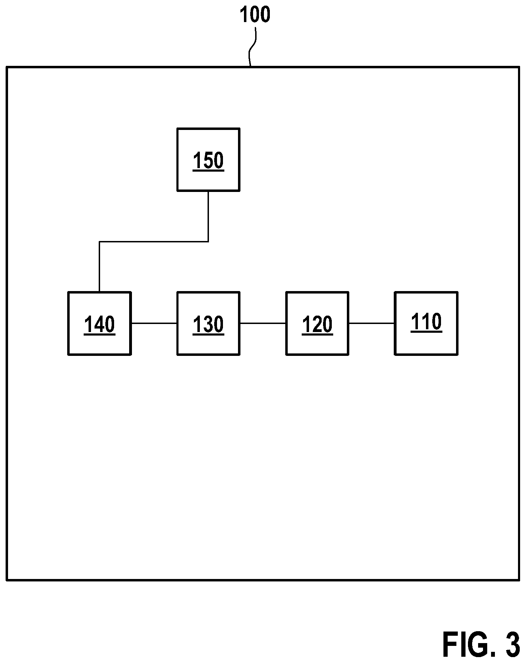

Fig. 3 zeigt ein Ausführungsbeispiel einer mehrphasigen, elektrischen Maschine (100), welche dazu eingerichtet ist, ein erfindungsgemäßes Verfahren durchzuführen.

Die elektrische Maschine 100 weist hierbei eine Stator-Rotor-Einheit 110 auf. Diese Stator-Rotor-Einheit 110 wird von einem Wechselrichter 120 gespeist, welcher beispielsweise als B6-Brücke ausgestaltet sein kann. Der Wechselrichter 120 wird wiederum von einer PWM-Erzeugungseinheit 130 angesteuert, welche die von einem Stromregler 140 empfangenen Vorgaben in entsprechende PWM-Tastverhältnisse umwandelt. Der Stromregler 140 ist dazu eingerichtet die Phasenströme $i_a$, $i_b$ und $i_c$ der Stator-Rotor-Einheit 110 abzutasten, was hier jedoch nicht dargestellt ist. Des Weiteren kann die elektrische Maschine 100 eine Verarbeitungseinheit 150 aufweisen, welche dazu eingerichtet ist, die Stromregelung derartig zu steuern, dass die Phasenströme $i_a$, $i_b$ und $i_c$ mittels des erfindungsgemäßen Verfahrens, beispielsweise gemäß Fig. 1, ermittelt werden.

**Patentansprüche**

1. Verfahren zur Ermittlung von Phasenströmen ($i_a$, $i_b$, $i_c$) einer mittels eines PWM-gesteuerten Wechselrichters gespeisten, rotierenden, mehrphasigen, elektrischen Maschine, umfassend die Verfahrensschritte:

   a. Bestimmen von Injektionsspannungen zu einem Zeitpunkt während einer Reglerabtastperiode, welche in wenigstens einer PWM-Periode (10) nach diesem Zeitpunkt zur Ansteuerung der elektrischen Maschine angelegt werden, die Injektionsspannungen setzen sich dabei aus vorgegebenen Spannungen, welche einen entsprechenden Grundwellenstrom erzeugen, und zusätzlichen hochfrequenten Spannungen zusammen,

   b. Bestimmen einer Auswerte-Richtung eines Phasenstromvektors der elektrischen Maschine in Abhängigkeit von den im Schritt a bestimmten Injektionsspannungen und/oder von einem Betriebspunkt der elektrischen Maschine und/oder von einer Temperaturabhängigkeit des Phasenstromvektors,

   c. Bestimmen je einer Anzahl an Strommessungen für jeden der Phasenströme ($i_a$, $i_b$, $i_c$), welche in wenigstens einem passiven Schaltzustand des Wechselrichters innerhalb der wenigstens einen PWM-Periode (10) durchgeführt werden sollen, in Abhängigkeit von der im Verfahrensschritt b bestimmten Auswerte-Richtung,

   d. Ermitteln der Phasenströme ($i_a$, $i_b$, $i_c$), welche in der wenigstens einen PWM-Periode (10) in der elektrischen Maschine fließen, in Abhängigkeit von der jeweiligen im Verfahrensschritt c bestimmten Anzahl an Strommessungen.

2. Verfahren nach Anspruch 1, **dadurch gekennzeichnet, dass** die Anzahl an Strommessungen, welche im Verfahrensschritt c für jeden Phasenstrom ($i_a$, $i_b$, $i_c$) bestimmt wird, in Summe für alle Phasenströme ($i_a$, $i_b$, $i_c$) einer maximal möglichen Anzahl an Strommessungen innerhalb des wenigstens einen passiven Schaltzustands des Wechselrichters entspricht.

3. Verfahren nach einem der Ansprüche 1 oder 2, **dadurch gekennzeichnet, dass** im Verfahrensschritt d wenigstens einer der Phasenströme ($i_a$, $i_b$, $i_c$) mittels mehrerer AD-Wandler ermittelt wird.

4. Verfahren nach Anspruch 3, **dadurch gekennzeichnet, dass** die Ermittlung des wenigstens einen Phasenstroms ($i_a$, $i_b$, $i_c$) erfolgt, indem die mehreren AD-Wandler den wenigstens einen Phasenstrom ($i_a$, $i_b$, $i_c$) zeitlich versetzt zueinander abtasten.

5. Verfahren nach einem der Ansprüche 1 bis 4, **dadurch gekennzeichnet, dass** im Verfahrensschritt d die Strommessungen in der Mitte des wenigstens einen passiven Schaltzustands erfolgen.

6. Verfahren nach einem der Ansprüche 1 bis 5, **dadurch gekennzeichnet, dass** im Verfahrensschritt d die Strommessungen der jeweiligen Phasenströme ($i_a$, $i_b$, $i_c$) spiegelsymmetrisch zueinander erfolgen.

**7.** Verfahren nach einem der Ansprüche 1 bis 6, **dadurch gekennzeichnet, dass** im Verfahrensschritt c für den Phasenstrom ($i_a$, $i_b$, $i_c$), welcher richtungsbezogen am weitesten von der Auswerte-Richtung abweicht, als Anzahl der Strommessungen Null bestimmt wird, wobei dieser Phasenstrom ($i_a$, $i_b$, $i_c$) im Verfahrensschritt d in Abhängigkeit von den übrigen Phasenströmen ($i_a$, $i_b$, $i_c$) mittels des ersten Kirchhoffschen Gesetzes ermittelt wird.

**8.** Verfahren nach einem der Ansprüche 1 bis 7, **dadurch gekennzeichnet, dass** nach dem Verfahrensschritt d ein Verfahrensschritt e und ein Verfahrensschritt f ablaufen, wobei im Verfahrensschritt e eine Clarke-Transformation in Abhängigkeit der im Verfahrensschritt c bestimmten Anzahl der Strommessungen für jeden der Phasenströme ($i_a$, $i_b$, $i_c$) und/oder in Abhängigkeit von der im Verfahrensschritt b bestimmten Auswerte-Richtung bestimmt wird, und wobei im Verfahrensschritt f der Phasenstromvektor in Auswerte-Richtung in Abhängigkeit von der Clarke-Transformation und den im Verfahrensschritt d ermittelten Phasenströmen ($i_a$, $i_b$, $i_c$), deren Anzahl an Strommessungen größer Null ist, bestimmt wird.

**9.** Elektrische Maschine (100), wobei die elektrische Maschine rotierend und mehrphasig ausgestaltet und mittels eines PWM-gesteuerten Wechselrichters (120) gespeist ist, **dadurch gekennzeichnet, dass** die elektrische Maschine (100) dazu eingerichtet ist, ein Verfahren nach einem der Ansprüche 1 bis 8 durchzuführen.

**Claims**

**1.** Method for determining phase currents ($i_a$, $i_b$, $i_c$) of a rotating multiphase electrical machine fed by means of a PWM-controlled inverter, comprising the method steps of:

a. determining injection voltages at a time point during one controller sampling period that are applied for drive of the electrical machine in at least one PWM period (10) following this time point, the injection voltages here are composed of specified voltages, which generate a corresponding fundamental wave current, together with additional, high-frequency voltages,
b. determining an evaluation direction of a phase current vector of the electrical machine depending on the injection voltages determined in step a and/or on an operating point of the electrical machine and/or on a temperature-dependency of the phase current vector,
c. determining, for each of the phase currents ($i_a$, $i_b$, $i_c$), a number of current measurements that should be carried out in each case in at least one passive switching state of the inverter within the at least one PWM period (10), depending on the evaluation direction determined in method step b,
d. determining the phase currents ($i_a$, $i_b$, $i_c$) that flow in the at least one PWM period (10) in the electrical machine, depending on the respective number of current measurements determined in method step c.

**2.** Method according to Claim 1, **characterized in that** the number of current measurements that are determined in method step c for each phase current ($i_a$, $i_b$, $i_c$) corresponds, for all the phase currents ($i_a$, $i_b$, $i_c$) in total, to a maximum possible number of current measurements within the at least one passive switching state of the inverter.

**3.** Method according to either of Claims 1 and 2, **characterized in that** in method step d at least one of the phase currents ($i_a$, $i_b$, $i_c$) is determined by means of a plurality of A/D converters.

**4.** Method according to Claim 3, **characterized in that** the determination of the at least one phase current ($i_a$, $i_b$, $i_c$) takes place **in that** the plurality of A/D converters sample the at least one phase current ($i_a$, $i_b$, $i_c$) with a time offset with respect to one another.

**5.** Method according to one of Claims 1 to 4, **characterized in that** in method step d the current measurements take place midway in the at least one passive switching state.

**6.** Method according to one of Claims 1 to 5, **characterized in that** in method step d the current measurements of the respective phase currents ($i_a$, $i_b$, $i_c$) take place with mirror symmetry with respect to one another.

**7.** Method according to one of Claims 1 to 6, **characterized in that** zero is determined in method step c as the number of current measurements for the phase current ($i_a$, $i_b$, $i_c$) that deviates most in terms of direction from the evaluation direction, wherein this phase current ($i_a$, $i_b$, $i_c$) is determined in method step d depending on the other phase currents ($i_a$, $i_b$, $i_c$) by means of Kirchoff's first law.

**8.** Method according to one of Claims 1 to 7, **characterized in that**, following method step d, a method step e and a method step f take place, wherein in method step e a Clarke transformation is determined depending on the number of current measurements determined in method step c for each of the phase currents ($i_a$, $i_b$, $i_c$) and/or depending on the evaluation direction determined in method step b, and wherein in method step f the phase current vector in the evaluation direction is determined depending on the Clarke transformation and on the phase currents ($i_a$, $i_b$, $i_c$) determined in method step d whose number of current measurements is greater than zero.

9. Electrical machine (100), wherein the electrical machine is of rotating, multiphase design and is fed by means of a PWM-controlled inverter (120), **characterized in that** the electrical machine (100) is designed to carry out a method according to one of Claims 1 to 8.

## Revendications

1. Procédé de détermination de courants de phase ($i_a$, $i_b$, $i_c$) d'une machine électrique rotative polyphasée, alimentée par un onduleur commandé par modulation de largeur d'impulsions (PWM), comprenant les étapes de procédé consistant à :

   a. déterminer des tensions d'injection à un instant pendant une période d'échantillonnage de régulateur, qui sont appliquées dans au moins une période PWM (10) après cet instant pour piloter la machine électrique, les tensions d'injection étant composées de tensions prédéfinies qui produisent un courant d'onde fondamentale correspondant et de tensions haute fréquence supplémentaires,
   b. déterminer une direction d'évaluation d'un vecteur de courant de phase de la machine électrique en fonction des tensions d'injection déterminées à l'étape a et/ou d'un point de fonctionnement de la machine électrique et/ou d'une dépendance par rapport à la température du vecteur de courant de phase,
   c. déterminer respectivement un nombre de mesures de courant pour chacun des courants de phase ($i_a$, $i_b$, $i_c$) qui sont à effectuer dans au moins un état de commutation passif de l'onduleur à l'intérieur de ladite au moins une période PWM (10) en fonction de la direction d'évaluation déterminée à l'étape de procédé b,
   d. établir les courants de phase ($i_a$, $i_b$, $i_c$) qui circulent dans ladite au moins une période PWM (10) dans la machine électrique en fonction du nombre de mesures de courant respectif déterminé à l'étape de procédé c.

2. Procédé selon la revendication 1, **caractérisé en ce que** le nombre de mesures de courant qui est déterminé à l'étape de procédé c pour chaque courant de phase ($i_a$, $i_b$, $i_c$) est déterminé, en somme pour tous les courants de phase ($i_a$, $i_b$, $i_c$) d'un nombre possible au maximum de mesures de courant à l'intérieur de l'au moins un état de commutation passif de l'onduleur.

3. Procédé selon l'une quelconque des revendications 1 ou 2, **caractérisé en ce qu'**à l'étape de procédé d, au moins l'un des courants de phase ($i_a$, $i_b$, $i_c$) est déterminé au moyen de plusieurs convertisseurs A/D.

4. Procédé selon la revendication 3, **caractérisé en ce que** l'établissement de l'au moins un courant de phase ($i_a$, $i_b$, $i_c$) est effectué **en ce que** les plusieurs convertisseurs A/D échantillonnent ledit au moins un courant de phase ($i_a$, $i_b$, $i_c$) en décalage dans le temps les uns par rapport aux autres.

5. Procédé selon l'une quelconque des revendications 1 à 4, **caractérisé en ce qu'**à l'étape de procédé d, les mesures de courant sont effectuées au milieu de l'au moins un état de commutation passif.

6. Procédé selon l'une quelconque des revendications 1 à 5, **caractérisé en ce qu'**à l'étape de procédé d, les mesures de courant des courants de phase respectifs ($i_a$, $i_b$, $i_c$) sont effectuées de manière symétrique les unes par rapport aux autres.

7. Procédé selon l'une quelconque des revendications 1 à 6, **caractérisé en ce qu'**à l'étape de procédé c, pour le courant de phase ($i_a$, $i_b$, $i_c$) qui dévie, par rapport à la direction, le plus de la direction d'évaluation, le zéro est déterminé comme le nombre des mesures de courant, ce courant de phase ($i_a$, $i_b$, $i_c$) étant établi à l'étape de procédé d en fonction des autres courants de phase ($i_a$, $i_b$, $i_c$) au moyen de la première loi de Kirchhoff.

8. Procédé selon l'une quelconque des revendications 1 à 7, **caractérisé en ce qu'**après l'étape de procédé d, une étape de procédé e et une étape de procédé f ont lieu, dans lequel, à l'étape de procédé e, une transformation de Clarke est déterminée en fonction du nombre des mesures de courant déterminé à l'étape de procédé c pour chacun des courants de phase ($i_a$, $i_b$, $i_c$) et/ou en fonction de la direction d'évaluation déterminée à l'étape de procédé b, et dans lequel, à l'étape de procédé f, le vecteur de courant de phase est déterminé dans la direction d'évaluation en fonction de la transformation de Clarke et des courants de phase ($i_a$, $i_b$, $i_c$) déterminés à l'étape de procédé d dont le nombre de mesures de courant est supérieur à zéro.

9. Machine électrique (100), la machine électrique étant configurée de manière rotative et polyphasée et étant alimentée au moyen d'un onduleur commandé par PWM (120), **caractérisée en ce que** la machine électrique (100) est aménagée pour effectuer un procédé selon l'une quelconque des revendications 1 à 8.

FIG. 1

FIG. 2

100

150

140 130 120 110

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **P. LANDSMANN et al.** Silent injection for slaiency based sensorless controll by means of current oversampling. *Industrial Technology (ICIT), 2013 IEEE International Conference,* 398-403

- **S. KIM.** *PWM Switching Frequency Singal Injection Sensorless Method in IPMSM, 2012, IEEE Transactions on Industry Applications*